# EUROPEAN PATENT SPECIFICATION

(11) **EP 3 815 991 B1**
(45) Date of publication and mention of the grant of the patent: **29.12.2021**
(21) Application number: 19717960.9
(22) Date of filing: 27.02.2019
(51) Int. Cl.: B60S 1/38

(54) **IMPROVED WINDSHIELD WIPER**
VERBESSERTER SCHEIBENWISCHER
BALAI AMÉLIORÉ POUR ESSUIE-GLACE

(30) Priority: 28.06.2018 ES 201831002 U
(43) Date of publication of application: 05.05.2021
(73) Proprietor: Cap Additive, S.L., 28006 Madrid (ES)
(72) Inventor: GONZALEZ MARTINEZ, Sergio Daniel, 32901 OURENSE (ES)
(74) Representative: Clarke Modet & Co.
(86) International application number: PCT/ES2019/070110
(87) International publication number: WO 2020/002725

(56) References cited:
- DE-A1-102016 201 335
- US-A- 2 006 322
- US-A- 3 116 510
- US-A1- 2008 301 897

## Description

### Field of the invention

The present invention relates to an improved windshield wiper that has components that improve the effectiveness of the windshield wiper, allowing for the removal of a greater amount of dirt from the windshield of a vehicle, in addition to providing greater durability to the windshield wiper. The windshield wiper can be applied to the automotive industry, but also to the motor sport industry and in general to the transportation industry (planes, trains, cars, buses, etc.).

### Background of the invention

A windshield wiper can be defined as a device used in vehicles for removing rain and dirt from the windshield of a vehicle or means of transportation.

A windshield wiper normally consists of an arm with the ability to rotate around one of the ends thereof and which has a long rubber edge (known as a blade) attached to one side of the same that is in contact with the windshield. The arm moves in an oscillating way over the windshield, moving the water and dirt off of the surface of the same. As a solution for adapting the effectiveness of the windshield wiper to different environmental conditions, it is common for the oscillation speed to be acted on, increasing said speed when necessary, such that in the same time period, the windshield wiper passes more often, pushing a larger amount of water or more dirt off of the windshield.

The majority of vehicles are provided with windshield wipers, in accordance with legal provisions.

Although it is a device that is more than efficient, the use of which has been successively affirmed, under certain situations of excessive dirt caused by the collision with insects or for other reasons, the use of the same spreads the dirt or remains of said insects over the rest of the windshield, which can end up making it more difficult to see and reduce the visual field of the driver.

Currently, the developments of windshield wiper manufacturers are focused on obtaining state-of-the-art windshields by means of the use of quality materials (rubber and plastic) in order to provide a superior cleaning and longer useful life. Furthermore, manufacturers have also developed aerodynamic designs that make use of the air that passes over the surface of the windshield and the windshield wipers themselves to cause the windshield wipers to exert greater pressure on the surface of the windshield. The combination of the aerodynamic design and the use of better materials allows for a better cleaning with respect to traditional windshield wipers, even at high speeds.

However, in situations where insects have a considerable size or are large in number (normally during the summer time and in conditions of high temperatures and humidity), neither the use of these better quality materials nor the the aerodynamic design of the windshield wipers, nor increasing the oscillation speed of the device will suffice. DE-A-10 2016 201 335 shows the preamble of claim 1.

### Description of the invention

One object of the invention is a windshield wiper that comprises a linear body which in turn comprises a central body, and which additionally comprises a blade housed inside the central body.

In the windshield wiper object of the invention, the central body comprises a triangular cross section with the blade in an essentially parallel position to one side of the triangular cross section, and a flexible tab on one vertex of the triangular cross section, such that one end of the blade protrudes through the vertex of the triangular cross section where the flexible tab is located.

The windshield wiper object of the invention comprises means for fastening the linear body to a mechanical arm.

In one embodiment of the invention, the means for fastening the linear body to a mechanical arm comprise two T-shaped tabs.

In the windshield wiper object of the invention the central body is made of a flexible material and the blade is made of a material that combines rigid and flexible characteristics.

The windshield wiper object of the invention enhances the use of traditional wipers by means of the double cleaning action of the blade made of rigid and flexible material; it improves the cleaning carried out by the windshield wipers in both directions (upwards and downwards) by preventing the central body from deforming at the thicker area in the core area of the central body.

The blade only cleans in the upwards direction, and thus has a certain inclined angle on the inside of the central body. In the downwards movement, the only part of the wiper that deforms is the tab situated behind the blade. During the downwards movement, it is the rubber which touches the windshield, and although it removes the accumulated water and dirt, the blade does not cause any effect; it eliminates the dirt caused by collisions with insects while driving or bird droppings or the accumulation of dirt due to other reasons (mud, dirt from the road, grease, etc.) and improves the driver's visibility, increasing their field of vision (eliminating streaks caused by traditional methods).

### Brief description of the drawings

To complete the description, and for the purpose of helping to make the characteristics of the invention more readily understandable, the present specification is accompanied by a set of figures constituting an integral part of the same, which by way of illustration and not limitation represent the following:

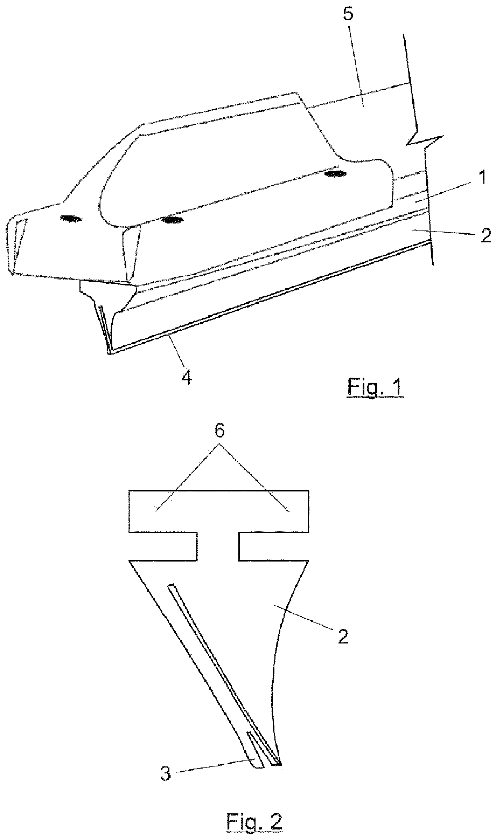

Figure 1 shows a perspective view of the improved wiper object of the invention mounted on a mechanical arm.
Figure 2 shows a perspective view of the linear body of the improved wiper object of the invention with one end sectioned showing the blade housed in the central body

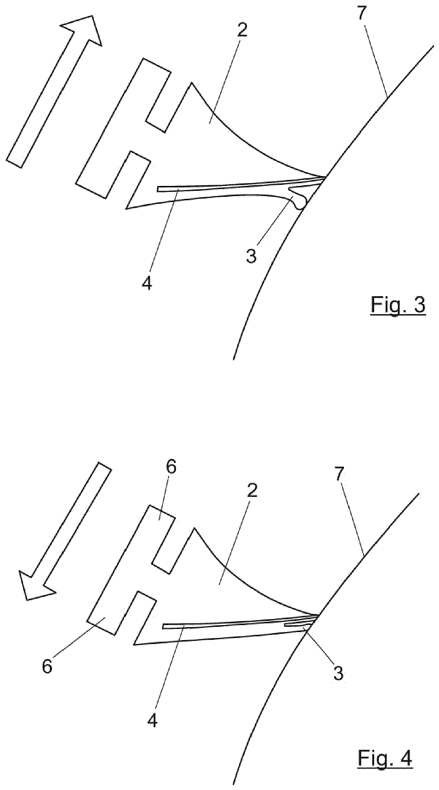

Figure 3 shows a cross-sectional view of the improved wiper in one direction of movement.
Figure 4 shows a cross-sectional view of the improved wiper moving in the opposite direction to that of the movement of figure 3.

The various numerical references found in the figures correspond to the following elements:
1. linear body
2. central body
3. flexible tab
4. blade
5. mechanical arm
6. T-shaped tab, and
7. windshield

### Detailed description of the invention

In light of the previously mentioned points and in reference to the numbering used in the figures, the object of the invention is a windshield wiper that comprises a linear body (1) which in turn comprises a central body (2) with a triangular cross section, such that the central body comprises a flexible tab (3) on one vertex of the triangular cross section.

The wiper object of the invention comprises a blade (4) housed inside the central body (2), such that one end of the blade (4) protrudes through the vertex of the triangular cross section where the flexible tab (3) is located, such that the protruding end of the blade (4) is located next to the flexible tab (3) of the aforementioned central body (2).

The blade (4) housed inside the central body (2) is situated in an essentially parallel position to one side of the triangular cross section of the central body (2).

The wiper object of the invention experiences two types of movement over a windshield (7), one in an upwards direction and the other in a downwards direction, in both movements the central body (2) resting against the windshield (7) at the vertex where both the flexible tab (3) and the blade (4) are located.

The triangular form of the cross section of the central body (2) makes it so the central body (2) maintains the aforementioned triangular cross section during the movements without any deformation, such that the blade (4) of the windshield wiper object of the invention performs the action of cleaning during the movement in the upwards direction, with the flexible tab (3) maintaining the position thereof, while in the downwards movement the flexible tab (3) deforms to perform an additional cleaning, dragging the rest of the dirt and preventing the blade (4) from dragging dirt and scratching the windshield.

Furthermore, the position of the blade (4) being essentially parallel to one side of the triangular cross section of the central body (2) along with the capability of deformation of the flexible tab (3) makes it so the end of the blade (4) in contact with the windshield (7) during the upwards movement makes contact with the windshield (7) exerting just the right amount of pressure on the same so that it can perform the action of cleaning on the windshield (7) without damaging the same. Likewise, the essentially parallel position of the blade (4) to one side of the triangular cross section of the central body (2), along with the position of the flexible tab (3) in contact with the windshield, facilitates the upwards movement of the wiper over the windshield without damaging the same.

The blade (4) of the windshield wiper object of the invention is made of a material that combines the properties of being rigid and flexible, for example, a metal or a hard plastic, which is mainly rigid, but had a certain degree of flexibility. The central body (2), however, is made of a purely flexible material, such as rubber.

The wiper object of the invention comprises means for fastening the same to a mechanical arm (5) which, in the preferred embodiment of the invention, are two T-shaped tabs (6), although this embodiment is not limiting, given that other fastening means for the mechanical arm are possible.

The mechanical arm (5), which does not form part of the invention, provides the movement for the wiper object of the invention, such that the aforementioned windshield wiper moves over the windshield (7) rotating around the end of the mechanical arm (5) to which the linear body (1) is fastened by means of the fastening means.

The invention is not intended to be limited to the specific embodiment described in this document. Those skilled in the art may develop other embodiments in light of the description made herein. As such, the scope of the invention is defined by the following claims.

## Claims

1. A windshield wiper that comprises a linear body (1) comprising a central body (2) and a blade (4) housed inside the central body (2), **characterized in that** the central body (2) comprises:
- a triangular cross section, with the blade (4) in a position that is essentially parallel to one side of the triangular cross section, and
- a flexible tab (3) on one vertex of the triangular cross section,
such that one end of the blade (4) protrudes through the vertex of the triangular cross section where the flexible tab (3) is located.

2. The windshield wiper according to claim 1, **characterized in that** it comprises means for fastening the linear body (1) to a mechanical arm (5).

3. The windshield wiper according to claim 2, **characterized in that** the means for fastening the linear body (1) to a mechanical arm (5) comprise two T-shaped tabs (6).

4. The windshield wiper according to any one of claims 1 to 3, **characterized in that**:
- the central body (2) is made of a flexible material, and
- the blade (5) is made of a rigid and flexible material.

## Patentansprüche

1. Scheibenwischerblatt, das einen linearen Körper (1) umfasst, der einen zentralen Körper (2) und ein Wischblatt (4) umfasst, das im Inneren des zentralen Körpers (2) aufgenommen ist, **dadurch gekennzeichnet, dass** der zentrale Körper (2) Folgendes umfasst:
- einen dreieckigen Querschnitt, mit dem Wischblatt (4) in einer Position, die im Wesentlichen parallel zu einer Seite des dreieckigen Querschnitts ist, und
- eine nachgiebige Lasche (3) an einem Scheitelpunkt des dreieckigen Querschnitts,
so dass ein Ende des Wischblattes (4) durch den Scheitelpunkt des dreieckigen Querschnitts ragt, wo sich die nachgiebige Lasche (3) befindet.

2. Scheibenwischerblatt gemäß Anspruch 1, **dadurch gekennzeichnet, dass** es Mittel zur Befestigung des linearen Körpers (1) an einem mechanischen Arm (5) umfasst.

3. Scheibenwischerblatt gemäß Anspruch 2, **dadurch gekennzeichnet, dass** die Mittel zur Befestigung des linearen Körpers (1) an einem mechanischen Arm (5) zwei T-förmige Laschen (6) umfassen.

4. Scheibenwischerblatt gemäß einem der Ansprüche 1 bis 3, **dadurch gekennzeichnet, dass:**
- der zentrale Körper (2) aus einem nachgiebigen Material besteht und
- das Wischblatt (5) aus einem starren und nachgiebigen Material besteht.

## Revendications

1. Essuie-glace qui comprend un corps linéaire (1) comprenant un corps central (2) et une lame (4) logée à l'intérieur du corps central (2), **caractérisé en ce que** le corps central (2) comprend
- une section transversale triangulaire, avec la lame (4) dans une position qui est essentiellement parallèle à un côté de la section transversale triangulaire, et
- une languette flexible (3) sur un sommet de la section transversale triangulaire,
de sorte qu'une extrémité de la lame (4) fait saillie à travers le sommet de la section transversale triangulaire où la languette flexible (3) est située.

2. Essuie-glace selon la revendication 1, **caractérisé en ce qu'**il comprend des moyens de fixation du corps linéaire (1) à un bras mécanique (5).

3. Essuie-glace selon la revendication 2, **caractérisé en ce que** les moyens de fixation du corps linéaire (1) à un bras mécanique (5) comprennent deux pattes en T (6).

4. Essuie-glace selon l'une quelconque des revendications 1 à 3, **caractérisé en ce que :**
- le corps central (2) est réalisé en un matériau souple, et
- le balai (5) est réalisé dans un matériau rigide et souple.
